# EUROPEAN PATENT APPLICATION

(11) **EP 4 631 639 A1**
(43) Date of publication of application: **15.10.2025**
(21) Application number: 23917616.7
(22) Date of filing: 27.10.2023
(51) Int. Cl.: B21D 22/00, B21D 22/20, B21D 37/00

(54) **PRESS DIE DESIGN METHOD AND PRESS DIE PRODUCTION METHOD**

(30) Priority: 18.01.2023 JP 2023005659
(71) Applicant: JFE Steel Corporation, Tokyo 100-0011 (JP)
(72) Inventor: KISHIGAMI, Yasuhiro, Tokyo 100-0011 (JP)
(74) Representative: Hoffmann Eitle
(86) International application number: PCT/JP2023/038952
(87) International publication number: WO 2024/154404

(57) **Abstract**

A method for designing a press forming die according to the present invention includes: a basic die model generating step (S1) of generating a basic die model obtained by modeling a basic actual die which is an actual die that becomes a base; an interface pressure distribution acquiring step (S3) of acquiring an interface pressure distribution acting on the basic die model at the bottom dead center of press forming by performing press forming analysis using the basic die model; an interface pressure region specifying step (S5) of specifying a high interface pressure region including a part having a high interface pressure and a low interface pressure region other than the high interface pressure region based on the interface pressure distribution; a stiffness reducible region specifying step (S7) of specifying a region where stiffness can be reduced in the basic die model; and a die structure determining step (S9) of determining a die structure having stiffness lower than that of the basic die model for a part within the region where stiffness can be reduced and including the high interface pressure region.

## Description

### Field

The present invention relates to a method for designing a press forming die and a method for manufacturing a press forming die capable of reducing a press forming load acting on a press forming die caused by press forming of a metal member. The metal member may be a hot rolled steel sheet, a cold rolled steel sheet, a galvanized steel sheet obtained by subjecting a steel sheet to surface treatment (electro-galvanizing, hot-dip galvanizing, organic finishing, or the like), or a plate made of various metals such as SUS, aluminum, and magnesium.

### Background

Application of a high-tensile steel sheet in an automotive body is expanding due to increasing needs for improving fuel efficiency, improving collision safety, and the like by weight reduction of automobiles. Deterioration of formability due to low ductility and deterioration of dimensional accuracy due to high material strength are problems for the high-tensile steel sheet to be applied.

In addition, since the press forming load increases when a high-tensile steel sheet is press-formed, it is necessary to change a press line or divide components, and such an increase in the press forming load also becomes an inhibiting factor for application of the high-tensile steel sheet. Therefore, a press forming die capable of reducing the press forming load is required. Patent Literature 1 discloses a method of reducing a press forming load by performing incremental forming by dividing and moving a press forming die.

### Citation List

### Patent Literature

Patent Literature 1: JP 2010-207907 A

### Summary

### Technical Problem

However, in the method described in Patent Literature 1, since the die has a divided and movable structure, the manufacturing cost of the press forming die becomes expensive, and also there is a concern about occurrence of press molding defects caused by the division of the die.

The present invention has been made to solve the above problems, and an object thereof is to provide a method for designing a press forming die and a method for manufacturing a press forming die capable of reducing a press forming load without increasing the manufacturing cost and also without complicating the structure.

### Solution to Problem

A method for designing a press forming die capable of reducing a press forming load according to the present invention includes: a basic die model generating step of generating a basic die model obtained by modeling a basic actual die which is an actual die that becomes a base; an interface pressure distribution acquiring step of acquiring an interface pressure distribution acting on the basic die model at a bottom dead center of press forming by performing press forming analysis using the basic die model; an interface pressure region specifying step of specifying a high interface pressure region including a part having a high interface pressure and a low interface pressure region other than the high interface pressure region based on the interface pressure distribution; a stiffness reducible region specifying step of specifying a region where stiffness can be reduced in the basic die model; and a die structure determining step of determining a die structure having stiffness lower than that of the basic die model for a part within the region where stiffness can be reduced and including the high interface pressure region.

In the die structure determining step, stiffness may be reduced by any one or a combination of a change in rib arrangement, elimination of a rib, a reduction of a thickness of a die, and a reduction of material strength of a die.

The high interface pressure region may have an interface pressure five times or more an interface pressure of the low interface pressure region.

In the die structure determining step, stiffness of a stiffness reducible region may be 1/8 or less of stiffness of the basic die model.

A method for manufacturing a press forming die capable of reducing a press forming load according to the present invention includes: a press forming die designing step of determining a stiffness reduced die structure having stiffness lower than that of the basic actual die by the method for designing a press forming die according to the present invention; a numerical control data acquiring step of acquiring numerical control data for NC machining based on the stiffness reduced die structure; and a step of manufacturing a die made of steel material or a casting die model by a numerically-controlled machine using the numerical control data.

### Advantageous Effects of Invention

The present invention includes the basic die model generating step, the interface pressure distribution acquiring step, the interface pressure region specifying step, the stiffness reducible region specifying step, and the die structure determining step. Therefore, the structure of the die is optimized and it becomes possible to reduce the press forming load. As a result, it is possible to manufacture a press forming die capable of reducing the press forming load when the high-tensile steel sheet is press-formed.

### Brief Description of Drawings

[FIG. 1] FIG. 1 is a flowchart of a method for designing a press forming die according to a first embodiment.
[FIG. 2] FIG. 2 is an explanatory view of a press formed part as a target in an Example.
[FIG. 3] FIG. 3 is an explanatory view of a conventional example of a press forming die in the Example.
[FIG. 4] FIG. 4 is an explanatory view of a comparative example of a press forming die in the Example.
[FIG. 5] FIG. 5 is an explanatory view of an invention example of a press forming die in the Example.
[FIG. 6] FIG. 6 is a view for describing a process of designing the invention example of the press forming die in the Example (part 1).
[FIG. 7] FIG. 7 is a view for describing a process of designing the invention example of the press forming die in the Example (part 2).
[FIG. 8] FIG. 8 is a graph comparing press forming loads of the conventional example, the comparative example, and the invention example of the press forming dies in the Example.
[FIG. 9] FIG. 9 is a flowchart of a method for manufacturing a press forming die according to a second embodiment.

### Description of Embodiments

Prior to the description of the embodiments, the background leading to the present invention will be described. In examining a press forming die capable of reducing a press forming load, the inventors first examined a phenomenon in which the press forming load increases by performing a press forming test and press forming analysis.

The press forming load rapidly increases near the bottom dead center of press forming, and the load near the bottom dead center of press forming includes not only a reaction force due to deformation of the press formed part (blank) but also a reaction force from a facing press forming die due to contact via the press formed part (blank). This reaction force is generated when the elastic deformation of the facing press forming die is suppressed by the stiffness of the press forming die structure.

In order to reduce the press forming load, the inventors have obtained an idea that the press forming load (interface pressure) at a part where the press forming load (interface pressure) acts near the bottom dead center of press forming can be reduced by reducing the reaction force for suppressing the die deformation by reducing the stiffness of the press forming die**.** Then, the inventors reached the conclusion that the selection of the part where the stiffness of the press forming die is to be reduced should be based on the load distribution (interface pressure distribution) at the bottom dead center in the press forming analysis. The present invention has been made based on such examination results, and specifically has a configuration indicated in the following embodiments.

### [First Embodiment]

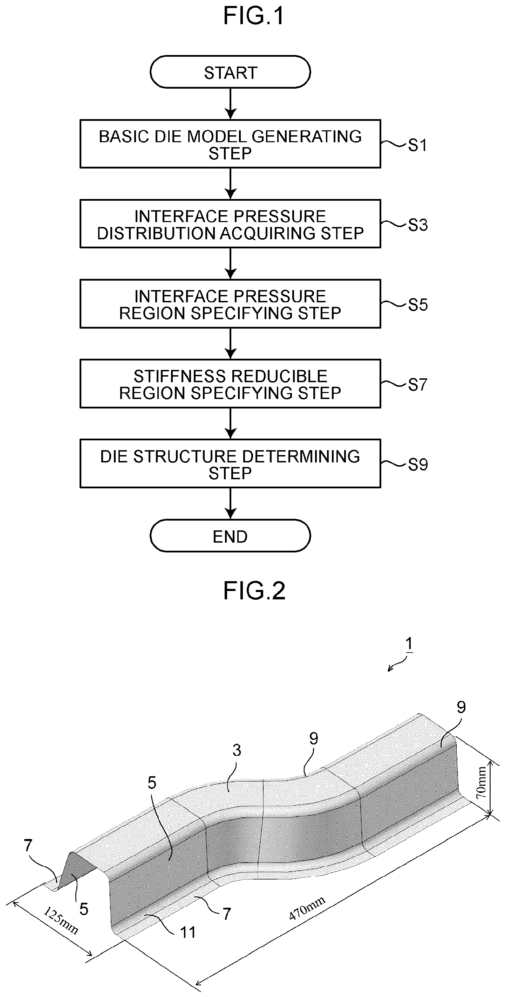

As illustrated in FIG. 1, a method for designing a press forming die according to a first embodiment includes a basic die model generating step (S1), an interface pressure distribution acquiring step (S3),an interface pressure region specifying step (S5), a stiffness reducible region specifying step (S7), and a die structure determining step (S9).

Hereinafter, each step will be described in detail.

### <Basic Die Model Generating Step>

The basic die model generating step (S1) is a step of generating a basic die model obtained by modeling a basic actual die, which is an actual die that becomes a base, with a solid element or a shell element. The basic actual die is an actual die before stiffness is reduced by applying the present invention.

### <Interface Pressure Distribution Acquiring Step>

The interface pressure distribution acquiring step (S3) is a step of acquiring an interface pressure distribution acting on the basic die model at the bottom dead center of press forming by performing press forming analysis by finite element analysis (FEM) or the like using the basic die model generated in the basic die model generating step (S1).

### <Interface Pressure Region Specifying Step>

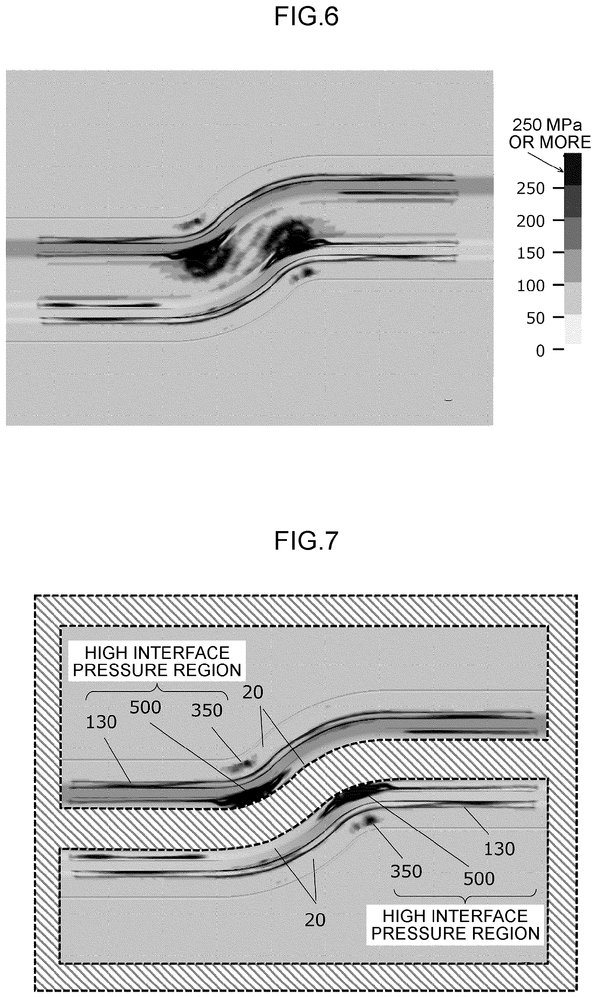

The interface pressure region specifying step (S5) is a step of specifying a high interface pressure region including a part having a high interface pressure and a low interface pressure region other than the high interface pressure region based on the interface pressure distribution acquired in the interface pressure distribution acquiring step (S3). As a method of specifying the low interface pressure region, for example, frequency distribution of the load (interface pressure) of each element of the basic die model at the bottom dead center of press forming is generated by the press forming analysis, and for example, an interface pressure PL at which the cumulative relative frequency is 0.5 is obtained, and a region where the interface pressure is equal to or less than PL may be determined as the low interface pressure region. Alternatively, in a contour diagram of the interface pressure distribution of the basic die model at the bottom dead center of press forming, a region having an interface pressure of 20 MPa or less widely distributed around a region having a locally high interface pressure (for example, in a contour diagram of the interface pressure distribution of FIG. 6 described later, a region of 100 MPa or more) may be determined as the low interface pressure region.

It is preferable to specify a part where the interface pressure acting on the press forming die at the bottom dead center of press forming is five times or more the low interface pressure region as the high interface pressure region. As a factor of increasing the interface pressure, in addition to the stiffness of a press machine, an effect of reducing the press forming load cannot be expected even if the stiffness of the dies is lowered, such as interference between the dies. However, the increase in interface pressure due to the former is larger than the increase in interface pressure due to the latter, and is often higher by five times or more than the low interface pressure region in experience. Therefore, by specifying a portion where the interface pressure acting on the press forming die is five times or more the interface pressure in the low interface pressure region as the high interface pressure region, it is possible to select only a region where the effect of reducing the press forming load can be expected by lowering the stiffness of the die.

### <Stiffness Reducible Region Specifying Step>

The stiffness reducible region specifying step (S7) is a step of specifying a region where the stiffness can be reduced in the basic die model. A part capable of reducing stiffness is a part excluding a basic structural portion 25 constituting the die. The basic structural portion 25 constituting the die refers to a structure necessary for installing and fixing the die to the press machine, a hoisting accessory of the die, a structure necessary for safety, and other structural portions necessary for the die function.

### <Die Structure Determining Step>

The die structure determining step (S9) is a step of determining a die structure having stiffness lower than that of the basic die model for a part within the stiffness reducible region specified in the stiffness reducible region specifying step (S7) and including the high interface pressure region specified in the interface pressure region specifying step (S5). The reason why such a part including the high interface pressure region is used as the target part (stiffness reduced part) for stiffness reduction is that the reaction force for suppressing the die deformation can be reduced by reducing the stiffness of the part, and the press load can be reduced. In addition, as a specific method of reducing the stiffness, for example, it is effective to remove a rib and change the rib arrangement. The rib refers to a reinforcing part provided on a back surface of the die excluding the basic structural portion 25 in order to prevent escape of the die due to elastic deformation of the die. The stiffness of the stiffness reduced part can be reduced by changing the rib arrangement or removing the rib.

In addition, it is also effective to reduce the thickness of the die in order to reduce the stiffness. Considering the elastic deformation of the die surface in a simplified manner with the deformation of a simple beam having a rectangular cross section, the deflection of the simple beam is proportional to the geometrical moment of inertia and the geometrical moment of inertia of the rectangular cross section is proportional to the cube of the sheet thickness, and thus when the thickness of the die is 1/n of the basic die model, the stiffness can be reduced to 1/n³ of the basic die model.

In addition, it is also effective to change the material of the die in order to reduce the stiffness. A carbon tool steel material (SK material) and an alloy tool steel (SKS3, SKD11, or the like) are used for the die, but the material of the part where the stiffness is reduced is changed to a material having a low modulus of longitudinal elasticity.

Any one of the removal of the rib, the change of the rib arrangement, the reduction of the thickness of the die, and the reduction of the material strength of the die may be applied to reduce the stiffness, or a combination thereof may be applied.

Furthermore, the degree of stiffness reduction may be, for example, 1/8 or less of the stiffness of the basic die model. This corresponds to setting the thickness of the die to 1/2 or less of the basic die model in a case where the stiffness is reduced by reducing the thickness of the die. Since the interface pressure in the high interface pressure region is five times or more the interface pressure in the low interface pressure region distributed around the high interface pressure region, the degree of stiffness reduction needs to be at least 1/5 or less (thickness of the die needs to be 58% or less of the basic die model), and is preferably 1/8 or less (thickness of the die is preferably 50% or less of the basic die model) in order to more reliably obtain the effect of reducing the press forming load.

According to the first embodiment, since the stiffness of the die is appropriately reduced, the press forming load can be reduced without complicating the structure of the die.

### [Second Embodiment]

Prior to the description of a second embodiment, types of press forming dies will be described. The press forming dies include a die made of casting and a die made of steel material. In the case of the press forming die made of casting, a full mold casting method (evaporative pattern casting method) is used in which a casting die model is manufactured from a material that disappears at a high temperature, such as expanded polystyrene, by NC machining using a numerically-controlled machine. In addition, in the case of the press forming die made of steel material, it is necessary to perform machining (cutting, grinding, and polishing) the steel material by NC machining.

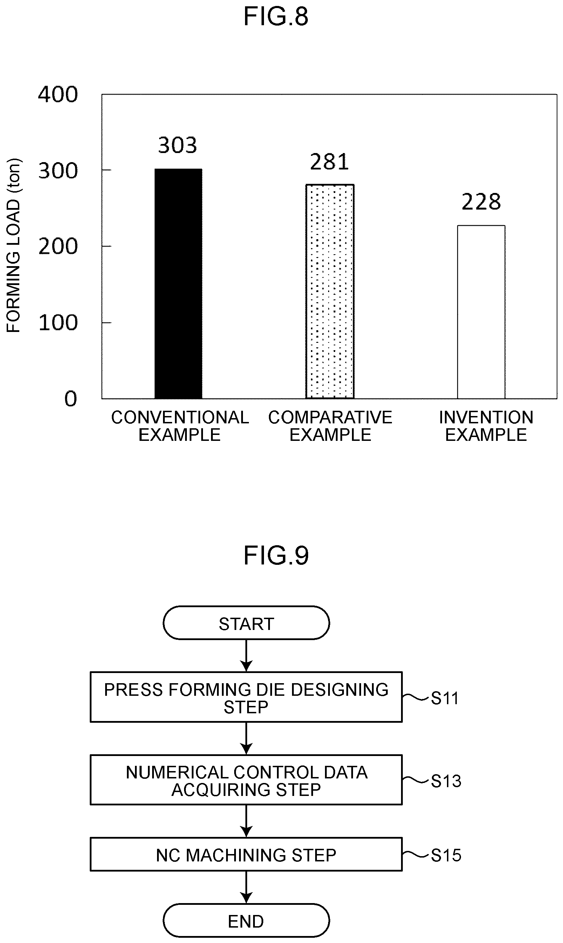

As illustrated in FIG. 9, the method for manufacturing a press forming die according to the second embodiment includes a press forming die designing step (S11), a numerical control data acquiring step (S13), and an NC machining step (S15). Hereinafter, each step will be described in detail.

### <Press Forming Die Designing Step>

The press forming die designing step (S11) is a step of determining a stiffness reduced die structure having stiffness lower than that of the basic actual die by the method for designing a press forming die of the first embodiment.

### <Numerical Control Data Acquiring Step>

The numerical control data acquiring step (S13) is a step of acquiring numerical control data for NC machining based on the stiffness reduced die structure acquired in the press forming die designing step (S11). The stiffness reduced die structure refers to a structure acquired as a die model in which the rib arrangement, the thickness distribution, and the material of the die in the basic die model of the solid element or the shell element are changed.

Data on the die model of the stiffness reduced die structure is input to a CAD/CAM program in cooperation with the numerically-controlled machine, and converted into numerical control data (NC program) for NC machining. The numerically-controlled machine machines a casting die model made of expanded polystyrene or a die made of steel material.

### <NC Machining Step>

The NC machining step (S15) is a step of actually manufacturing a casting die model made of expanded polystyrene or a die made of steel material by the numerically-controlled machine using the numerical control data (NC program) acquired in the numerical control data acquiring step (S13).

According to the second embodiment, it is possible to manufacture a press forming die capable of reducing a press forming load when a high-tensile steel sheet is press-formed.

### [Example]

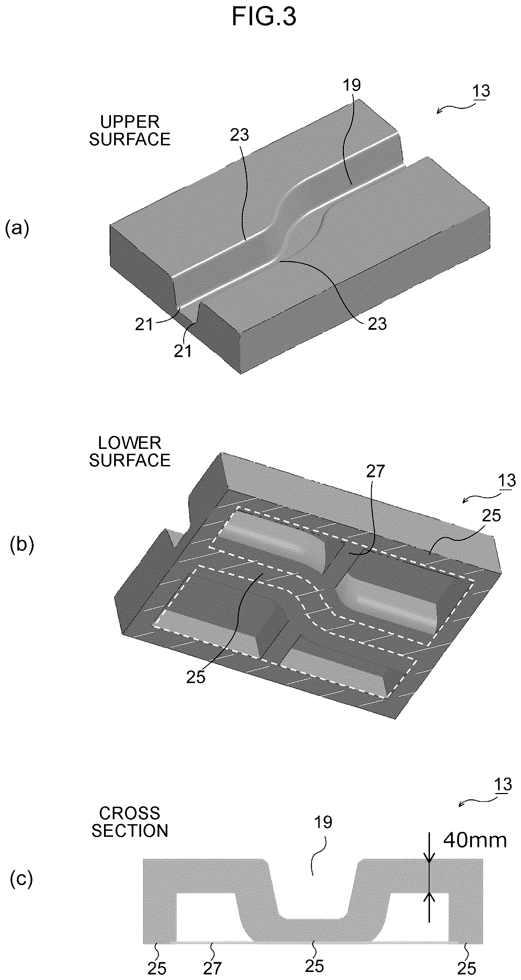

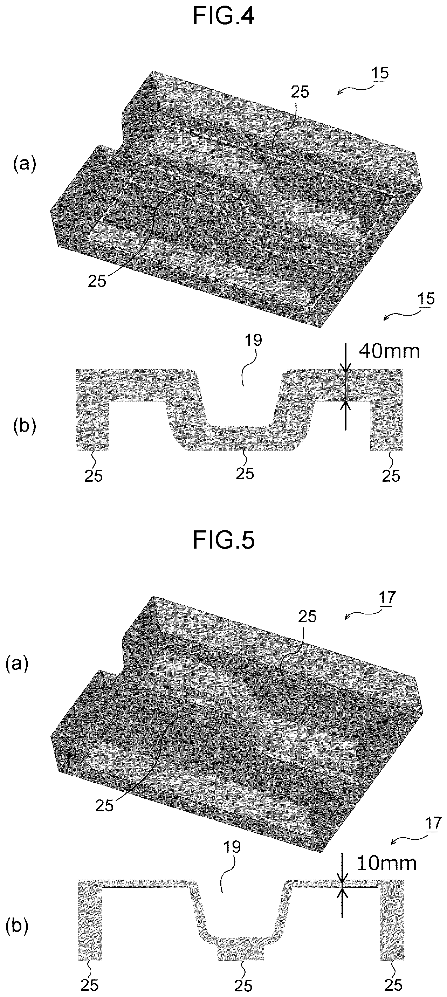

A simulation for confirming the effect of the invention has been performed, and the description will be given below. As illustrated in FIG. 2, a press formed part 1 targeted in the present example is a hat-shaped cross section including a top portion 3, a side wall portion 5, a flange portion 7, a shoulder part of a punch 9, and a shoulder part of a die 11. The material of a blank for forming the press formed part 1 is a 1180 MPa-class high-tensile steel sheet having a sheet thickness of 1.6 mm. The press forming loads were evaluated using a press forming die 13 (conventional example) of FIG. 3, a press forming die 15 (comparative example) of FIG. 4, and a press forming die 17 (invention example) of FIG. 5 as dies. In FIGS. 3 to 5, only a punch is illustrated, but dies and pressure pads corresponding to the punch are also provided in the press forming dies 13, 15, and 17.

As illustrated in FIG. 3(a) illustrating an upper surface, in the press forming die 13 (conventional example) illustrated in FIG. 3, a groove-shaped portion 19 corresponding to the press formed part 1 is formed on a forming surface side, and a first shoulder part 21 corresponding to the shoulder part of a punch 9 of the press formed part 1 is provided on both sides of a groove bottom. In addition, a second shoulder part 23 corresponding to the shoulder part of a die 11 of the press formed part 1 is provided at an inlet portion of the groove.

Furthermore, as illustrated in a lower surface of FIG. 3(b), the press forming die 13 is a basic structural portion 25 whose peripheral edge is not deformed. In addition, a portion corresponding to the groove bottom is also the basic structural portion 25 that is not deformed. In FIG. 3(b), the basic structural portion 25 is indicated by hatching. In addition to the basic structural portion 25, the press forming die 13 includes a transverse rib 27 crossing the back side of the die at the center of the back side of the die. As illustrated in the cross section of FIG. 3(c), the thickness of the portion other than the basic structural portion 25 of the outer peripheral portion is 40 mm.

The press forming die 15 (comparative example) illustrated in FIG. 4 is obtained by removing the transverse rib 27 from the press forming die 13 illustrated in FIG. 3. In the press forming die 17 (invention example) illustrated in FIG. 5, the die thickness in the stiffness reducible range of the press forming die 15 illustrated in FIG. 4 is reduced from 40 mm to 10 mm, and the stiffness of the thinned portion is reduced to 1/64.

A process leading to the die structure illustrated in FIG. 5 will be described. An interface pressure distribution at the bottom dead center of press forming was acquired using the press forming die 15 (comparative example) illustrated in FIG. 4 as a basic die model. This interface pressure distribution is illustrated in FIG. 6. In FIG. 7, the basic structural portion 25 in which the interface pressure cannot be reduced as compared with FIG. 6 is indicated by hatching, and main interface pressures are indicated by numerical values.

As illustrated in FIG. 7, the interface pressure of the portion corresponding to the shoulder part of a punch 9 in a bent portion in the longitudinal direction is the highest at 500 MPa, and the interface pressure of the portion corresponding to the flange portion 7 in a bent portion in the longitudinal direction is 350 MPa. In addition, portions having the interface pressure of 130 MPa are scattered in a portion corresponding to the flange portion 7 of the linear portion continuous to the bent portion in the longitudinal direction. The interface pressures acting on the press forming die 15 were 5 times or more the interface pressure of 20 MPa in the low interface pressure region, which is the peripheral portion, and these regions were specified as the high interface pressure region. Since the specified high interface pressure region is not the basic structural portion 25, all the regions where stiffness can be reduced including the high interface pressure region are specified as stiffness reducible regions. A press forming die in which the thickness of the press forming die 15 in the specified stiffness reducible region is reduced is the press forming die 17 (invention example) illustrated in FIG. 5.

FIG. 8 indicates comparison of press forming loads when press forming is performed by the conventional example, the comparative example, and the invention example of the press forming dies 13, 15, and 17, respectively. The press forming load was 303 tons in the conventional example, 281 tons in the press forming die 15 according to the comparative example, which was reduced by 7% as compared with the conventional example, and 228 tons in the press forming die 17 according to the invention example, which was further reduced as compared with the comparative example and reduced by 25% as compared with the conventional example. From the above, it was demonstrated that the press forming load can be reduced by the method for designing a press forming die according to the present invention.

### Industrial Applicability

According to the present invention, it is possible to provide a method for designing a press forming die and a method for manufacturing a press forming die capable of reducing a press forming load without increasing manufacturing cost and also without complicating the structure.

### Reference Signs List

- 1: PRESS FORMED PART

- 3: TOP PORTION
- 5: SIDE WALL PORTION
- 7: FLANGE PORTION
- 9: SHOULDER PART OF A PUNCH
- 11: SHOULDER PART OF A DIE
- 13: PRESS FORMING DIE (CONVENTIONAL EXAMPLE)
- 15: PRESS FORMING DIE (COMPARATIVE EXAMPLE)
- 17: PRESS FORMING DIE (INVENTION EXAMPLE)
- 19: GROOVE-SHAPED PORTION
- 21: FIRST SHOULDER PART
- 23: SECOND SHOULDER PART
- 25: BASIC STRUCTURAL PORTION
- 27: TRANSVERSE RIB

## Claims

1. A method for designing a press forming die capable of reducing a press forming load, the method comprising:
a basic die model generating step of generating a basic die model obtained by modeling a basic actual die which is an actual die that becomes a base;
an interface pressure distribution acquiring step of acquiring an interface pressure distribution acting on the basic die model at a bottom dead center of press forming by performing press forming analysis using the basic die model;
an interface pressure region specifying step of specifying a high interface pressure region including a part having a high interface pressure and a low interface pressure region other than the high interface pressure region based on the interface pressure distribution;
a stiffness reducible region specifying step of specifying a region where stiffness can be reduced in the basic die model; and
a die structure determining step of determining a die structure having stiffness lower than that of the basic die model for a part within the region where stiffness can be reduced and including the high interface pressure region.

2. The method for designing a press forming die according to claim 1, wherein in the die structure determining step, stiffness is reduced by any one or a combination of a change in rib arrangement, elimination of a rib, a reduction of a thickness of a die, and a reduction of material strength of a die.

3. The method for designing a press forming die according to claim 1 or 2, wherein the high interface pressure region has an interface pressure five times or more an interface pressure of the low interface pressure region.

4. The method for designing a press forming die according to claim 1 or 2, wherein in the die structure determining step, stiffness of a stiffness reducible region is 1/8 or less of stiffness of the basic die model.

5. The method for designing a press forming die according to claim 3, wherein in the die structure determining step, stiffness of a stiffness reducible region is 1/8 or less of stiffness of the basic die model.

6. A method for manufacturing a press forming die capable of reducing a press forming load, the method comprising:
a press forming die designing step of determining a stiffness reduced die structure having stiffness lower than that of the basic actual die by the method for designing a press forming die according to claim 1 or 2;
a numerical control data acquiring step of acquiring numerical control data for NC machining based on the stiffness reduced die structure; and
a step of manufacturing a die made of steel material or a casting die model by a numerically-controlled machine using the numerical control data.
